# EUROPÄISCHE PATENTSCHRIFT

(11) **EP 0 518 144 B1**
(45) Veröffentlichungstag und Bekanntmachung des Hinweises auf die Patenterteilung: **19.07.1995**
(21) Anmeldenummer: 92109148.4
(22) Anmeldetag: 30.05.1992
(51) Int. Cl.: F16G 3/00

(54) **Förderbandverbinderelement**
Fastener for conveyor belt
Elément de jonction de courroie transporteuse

(30) Priorität: 05.06.1991 DE 4118364
(43) Veröffentlichungstag der Anmeldung: 16.12.1992
(73) Patentinhaber: MATO Maschinen- und Metallwarenfabrik Curt Matthaei GmbH & Co KG, D-63071 Offenbach (DE)
(72) Erfinder: Herold, Wolfgang, W-6050 Offenbach am Main (DE)
(74) Vertreter: Schieferdecker, Lutz, Dipl.-Ing.

(56) Entgegenhaltungen:
- DE-C- 18 827
- DE-C- 832 366
- FR-A- 1 203 189
- GB-A- 764 530
- GB-A- 956 169
- GB-A- 2 146 730
- US-A- 1 768 935

## Beschreibung

Die Erfindung betrifft ein Förderbandverbinderelement zum gelenklosen Verbinden der Enden von Förderbändern mit den Merkmalen des Oberbegriffes des Anspruches 1.

Bei den Förderbandverbinderelementen der genannten Art handelt es sich jeweils um mehrere, längliche bzw. streifenförmige Einzelteile, die auf beiden Seiten der zu verbindenden Enden von Förderbändern angeordnet werden und dabei die Stoßstelle überbrücken. Die länglichen, streifenförmigen Einzelteile weisen Durchtrittsöffnungen auf und werden mit Hilfe von Krampen an den Enden des Förderbandes befestigt. Die Krampen durchdringen mit ihren Schenkeln die Durchtrittsöffnungen und werden auf der Austrittsseite sodann umgelegt bzw. umgebogen. Eine derartige Verbindung der Enden eines Förderbandes bzw. der Enden von Förderband-Teilstücken ist sicher und zuverlässig. Sie ist in der Lage, große Kräfte zu übertragen und ist auch wartungsfrei und in vielen Fällen haltbarer als das Förderband selbst.

Der Erfindung liegt das Problem zugrunde, die Brauchbarkeit derartiger Förderbandverbinderelemente noch weiter zu erhöhen.

Zur Lösung dieser Aufgabe sieht die Erfindung vor, daß ein Halte- und Abdichtelement zum Verbinden mehrerer Einzelteile vorgesehen und an diesen derart angeordnet ist, daß die Enden der beiden zu verbindenden Förderbänder im Bereich ihrer Stirnflächen sowie längs ihrer Außenkanten an dem Halte-und Abdichtelement anliegen.

Das Halte- und Abdichtelement verbindet einerseits mehrere längliche bzw. streifenförmige Einzelteile und bildet aus diesen ein plattenförmiges Förderbandverbinderelement. Dies erleichtert die Handhabung und erhöht den Gebrauchswert. Darüber hinaus dient das Halte- und Abdichtelement zum Verschließen der Stoßstelle an den Enden der zu verbindenden Förderbänder bzw. der Förderband-Teilstücke. Der in der Regel an der Stoßstelle vorhandene, schmale Spalt zwischen den Stirnflächen der Förderbandenden wird mit Hilfe des Halte-und Abdichtelementes sicher und zuverlässig verschlossen, zumal Förderbandverbinderelemente auf beiden Seiten des Förderbandes angeordnet werden und dadurch zwei Halte- und Abdichtelemente an jeder Stoßstelle Verwendung finden. Jeweils ein Halte- und Abdichtelement ist somit im Bereich der stirnseitigen Außenkanten an den Enden der Förderbänder auf jeder Seite vorgesehen und verhindert einerseits den Eintritt von Material oder Flüssigkeit in die Stoßstelle und verhindert gleichermaßen andererseits auch den Austritt von gegebenenfalls dort eingedrungenem Material bzw. Flüssigkeit.

Weitere Merkmale der Erfindung gehen aus Unteransprüchen im Zusammenhang mit der Beschreibung und der Zeichnung hervor.

Die Erfindung wird nachstehend anhand von Ausführungsbeispielen, die in der Zeichnung dargestellt sind, näher beschrieben .

Dabei zeigen:
- Fig. 1:: eine Stirnansicht von einem oberen und einem unteren Förderbandverbinderlement;
- Fig. 2:: eine Draufsicht auf das untere Förderbandverbinderelement;
- Fig. 3:: einen Schnitt durch eine Stoßstelle mit den Enden zweier Förderbänder und mit die Stoßstelle überbrückenden und mit Hilfe von Krampen befestigten Förderbandverbinderelementen längs der Linie III - III in Fig. 2;
- Fig. 4:: einen Schnitt wie in Fig. 3 durch eine abgewandelte Ausführungsform und
- Fig. 5:: einen Schnitt wie in den Figuren 3 und 4 von einer dritten Ausführungsform.

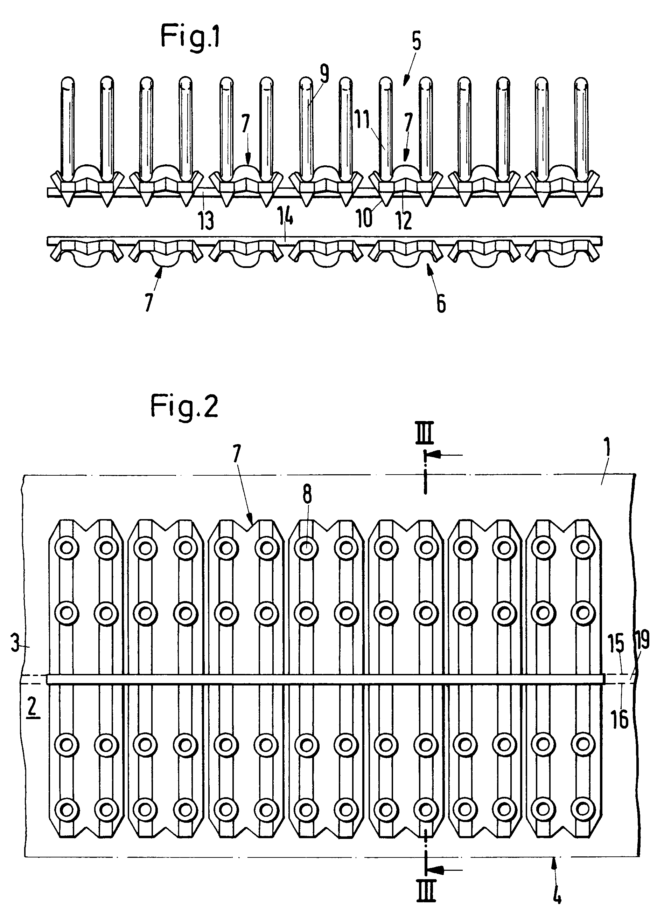

Zum gelenklosen Verbinden der in Fig. 2 zusätzlich strichpunktiert angedeuteten Enden 1, 2 von Förderbändern 3, 4 bzw. von Förderbandteilstücken 3, 4 dienen jeweils ein oberes Förderbandverbinderlement 5 und ein unteres Förderbandverbinderelement 6. Beide Förderbandverbinderelemente 5 und 6 bestehen aus mehreren, länglichen bzw. streifenförmigen Einzelteilen 7, die Durchtrittsöffnungen 8 für Krampen 9 aufweisen. Gemäß Fig. 1 sind die Krampen 9 in das obere Förderbandverbinderelement 5 derart eingesetzt, daß die Spitzen 1o an den Schenkeln 11 ein wenig aus der Unterseite 12 der Einzelteile 7 heraustreten.

Zum Verbinden von mehreren, in einer Ebene befindlichen Einzelteilen 7 ist sowohl beim oberen Förderbandverbinderelement 5 als auch beim unteren Förderbandverbinderlement 6 jeweils ein Halte- und Abdichtelement 13 bzw. 14 vorgesehen. Dieses Halte- und Abdichtelement 13 bzw. 14 ist an den Einzelteilen 7 derart angeordnet, daß die Enden 1, 2 der beiden zu verbindenden Förderbänder 3, 4 bzw. der Förderband-Teilstücke 3, 4 im Bereich ihrer Stirnflächen 15, 16 sowie längs ihrer Außenkanten 17 , bzw. 18 an den Halte- und Abdichtelementen 13 und 14 anliegen. Dazu sind die die Einzelteile 7 verbindenden Halte- und Abdichtelemente 13 und 14 an den Einzelteilen 7 jeweils mittig und sie kreuzend angeordnet (Fig. 2).

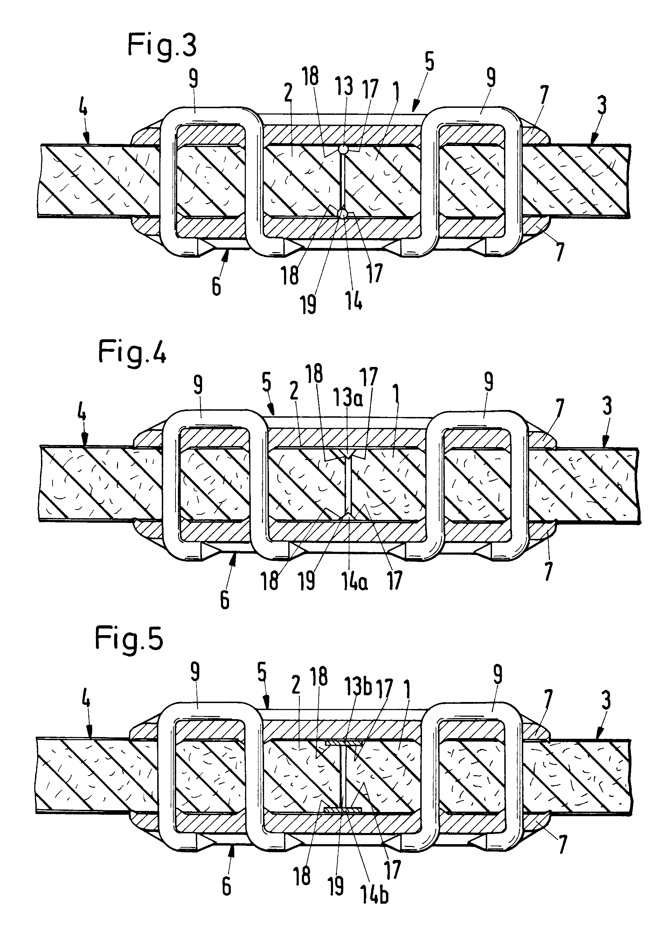

Gemäß dem in Fig. 3 dargestellten Ausführungsbeispiel ist jedes Halte- und Abdichtelement 13 bzw. 14 ein Draht, d.h. es ist im Querschnitt kreisförmig. Ein solcher Querschnitt ist jedoch nicht zwingend notwendig. Die Halte- und Abdichtelemente 13 a und 13b bzw 14 a und 14 b können auch einen von der Kreisform abweichenden Querschnitt aufweisen und z.B. gemäß Fig. 4 im Querschnitt dreieckig sein oder gemäß Fig. 4 im Querschnitt rechteckig sein.

Sofern die Halte- und Abdichtelemente 13, 13 a bzw. 14 und 14 a Drähte aus einem lötbaren oder schweißbaren Werkstoff sind, werden sie entsprechend an den länglichen, streifenförmigen Einzelteilen 7 angelötet oder engeschweißt.

Grundsätzlich ist es aber auch möglich, die Halte- und Abdichtelemente 13, 13a und 14, 14a bzw. 13 b und 14 b mit den Einzelteilen 7 durch Kleben zu verbinden. Eine solche Verbindung bietet sich insbesondere dann an, wenn die Halte- und Abdichtelemente 13 b und 14 b dünne sowie schmale Dichtungs- und Klebestreifen sind. Sie überdecken ebenso wie die im Querschnitt kreisförmigen oder dreieckigen, in der Regel aus Draht bestehenden Halte- und Abdichtelemente 13, 13 a und 14, 14 a den Spalt 19 an der Stoßstelle bzw. zwischen den beiden Stirnflächen 15 und 16 an den Enden 1 und 2 der Förderbänder 3 und 4 bzw. der Förderband-Teilstücke 3 und 4. Unabhängig von der lichten Weite des Spaltes 19 verschließen die Halte- und Abdichtelemente 13, 13 a und 13 b bzw. 14, 14 a und 14 b ihn sicher und zuverlässig. Die Abdichtung erfolgt sowohl formschlüssig als auch kraftschlüssig, wodurch ebenfalls eine hohe Wirksamkeit erzielt wird.

Wie die verschiedenen Figuren 1 - 5 ferner zeigen, wird eine einwandfreie Funktion des bzw. der Halte-und Abdichtelemente 13, 13a und 13b bzw. 14, 14a und 14 b dann erreicht, wenn sie an den länglichen, streifenförmigen Einzelteilen 7 an deren den zu verbindenden Förderbändern 3, 4 zugewandten Seite sowie zwischen den Krampen 9 angeordnet sind. Die Halte- und Abdichtelemente befinden sich in gleich großem Abstand zwischen den Krampen 9 und überdecken den Spalt 19 oder dringen geringfügig in ihn ein.

## Patentansprüche

1. Förderbandverbinderelement zum gelenklosen Verbinden der Enden (1, 2) von Förderbändern (3, 4), das mehrere, längliche bzw. streifenförmige Einzelteile umfasst, die Durchtrittsöffnungen (8) für mit ihren Schenkeln (11) hindurchtretende Krampen (9) aufweisen, dadurch gekennzeichnet, daß ein Halte- und Abdichtelement (13, 13 a, 13 b bzw. 14, 14 a, 14 b) zum Verbinden mehrerer Einzelteile (7) vorgesehen und an diesen derart angeordnet ist, daß die Enden (1, 2) der beiden zu verbindenden Förderbänder (3, 4) im Bereich ihrer Stirnflächen (15, 16) sowie längs ihrer Außenkanten (17, 18) an dem Halte- und Abdichtelement (13, 13 a, 13 b bzw. 14, 14 a, 14 b) anliegen.

2. Förderbandverbinderelement nach Anspruch 1, dadurch gekennzeichnet, daß das die Einzelteile (7) verbindende Halte- und Abdichtelement (13, 13a, 13b bzw. 14, 14a, 14b) an den Einzelteilen (7) jeweils mittig und sie kreuzend angeordnet ist.

3. Förderbandverbinderelement nach einem oder mehreren der vorhergehenden Ansprüche, dadurch gekennzeichnet, daß das Halte- und Abdichtelement (13, 14) im Querschnitt kreisförmig ist.

4. Förderbandverbinderelement nach einem oder mehreren der vorhergehenden Ansprüche, dadurch gekennzeichnet, daß das Halte- und Abdichtelement (13a, 13b bzw. 14a, 14b) einen von der Kreisform abweichenden Querschnitt aufweist.

5. Förderbandverbinderelement nach einem oder mehreren der vorhergehenden Ansprüche, dadurch gekennzeichnet, daß das Halte- und Abdichtelement (13a, 14a) im Querschnitt dreieckig ist.

6. Förderbandverbinderelement nach einem oder mehreren der vorhergehenden Ansprüche, dadurch gekennzeichnet, daß das Halte- und Abdichtelement (14a, 14b) im Querschnitt rechteckig ist.

7. Förderbandverbinderelement nach einem oder mehreren der vorhergehenden Ansprüche, dadurch gekennzeichnet, daß das Halte- und Abdichtelement (13, 13a bzw. 14, 14a) ein Draht ist.

8. Förderbandverbinderelement nach einem oder mehreren der vorhergehenden Ansprüche, dadurch gekennzeichnet, daß das Halte- und Abdichtelement (13, 13a, 13b bzw. 14, 14a, 14b) mit den Einzelteilen (7) durch Schweissen/Löten/Kleben verbunden ist.

9. Förderbandverbinderelement nach einem oder mehreren der vorhergehenden Ansprüche, dadurch gekennzeichnet, daß als Halte- und Abdichtelement (13b, 14b) ein Dichtungs- und Klebstreifen vorgesehen ist.

## Claims

1. A conveyor belt connector element for non-pivotally connecting the ends (1, 2) of conveyor belts (3, 4), which includes a plurality of elongate or strip-like individual portions which have through openings (8) for staples (9) which pass therethrough with their limbs (11), characterised in that a holding and sealing element (13, 13a, 13b and 14, 14a, 14b respectively) is provided for connecting a plurality of individual portions (17) and is arranged thereon in such a way that the ends (1, 2) of the two conveyor belts (3, 4) to be connected bear in the region of their end faces (15, 16) and along their outer edges (17, 18) against the holding and sealing element (13, 13a, 13b and 14, 14a, 14b respectively).

2. A conveyor belt connector element according to claim 1 characterised in that the holding and sealing element (13, 13a, 13b and 14, 14a, 14b respectively) which connects the individual portions (7) is arranged centrally on each of the individual portions (7) and in crossing relationship therewith.

3. A conveyor belt connector element according to one or more of the preceding claims characterised in that the holding and sealing element (13, 14) is of circular cross-section.

4. A conveyor belt connector element according to one or more of the preceding claims characterised in that the holding and sealing element (13a, 13b and 14a, 14b respectively) is of a cross-section which differs from the circular shape.

5. A conveyor belt connector element according to one or more of the preceding claims characterised in that the holding and sealing element (13a, 14a) is of triangular cross-section.

6. A conveyor belt connector element according to one or more of the preceding claims characterised in that the holding and sealing element (14a, 14b) is of rectangular cross-section.

7. A conveyor belt connector element according to one or more of the preceding claims characterised in that the holding and sealing element (13, 13a, and 14, 14a respectively) is a wire.

8. A conveyor belt connector element according to one or more of the preceding claims characterised in that the holding and sealing element (13, 13a, 13b and 14, 14a, 14b respectively) is connected to the individual portions (7) by welding/soldering/glueing.

9. A conveyor belt connector element according to one or more of the preceding claims characterised in that a sealing and adhesive strip is provided as the holding and sealing element (13b, 14b).

## Revendications

1. Elément de jonction de courroie transporteuse pour la jonction non articulée des extrémités (1, 2) de courroies transporteuses (3, 4), comprenant plusieurs pièces allongées respectivement en forme de bandelettes et présentant des ouvertures de passage (8) traversées par les branches (11) de pattes (9), caractérisé en ce qu'il est prévu un élément de retenue et d'étanchéité (13, 13 a, 13 b respectivement 14, 14 a, 14 b) pour la jonction de plusieurs pièces (7), élément qui est disposé de sorte que les extrémités (1, 2) des deux courroies transporteuses à joindre (3, 4) s'appliquent, dans la zone de leurs faces avant (15, 16) ainsi que le long de leurs bords externes (17, 18), contre l'élément de retenue et d'étanchéité (13, 13 a, 13 b respectivement 14, 14 a, 14 b).

2. Elément de jonction de courroie transporteuse selon la revendication 1, caractérisé en ce que l' élément de retenue et d'étanchéité (13, 13a, 13b respectivement 14, 14a, 14b) reliant les pièces (7) est disposé contre les pièces (7) respectivement au milieu en les croisant.

3. Elément de jonction de courroie transporteuse selon l'une ou plusieurs des revendications précédentes, caractérisé en ce que l'élément de retenue et d'étanchéité (13, 14) a une section transversale de forme circulaire.

4. Elément de jonction de courroie transporteuse selon l'une ou plusieurs des revendications précédentes caractérisé en ce que l'élément de retenue et d'étanchéité (13a, 13b respectivement 14a, 14b) présente une section transversale différente de la forme circulaire.

5. Elément de jonction de courroie transporteuse selon l'une ou plusieurs des revendications précédentes, caractérisé en ce que l'élément de retenue et d'étanchéité (13a, 14a) est de section transversale triangulaire.

6. Elément de jonction de courroie transporteuse selon l'une ou plusieurs des revendications précédentes, caractérisé en ce que l'élément de retenue et d'étanchéité (14a, 14b) est de section transversale rectangulaire.

7. Elément de jonction de courroie transporteuse selon l'une ou plusieurs des revendications précédentes, caractérisé en ce que l'élément de retenue et d'étanchéité (13, 13a, respectivement 14, 14a) est un fil métallique.

8. Elément de jonction de courroie transporteuse selon l'une ou plusieurs des revendications précédentes caractérisé en ce que l'élément de retenue et d'étanchéité (13, 13a, 13b respectivement 14, 14a, 14b) est relié aux pièces (7) par soudure/brasage/collage.

9. Elément de jonction de courroie transporteuse selon l'une ou plusieurs des revendications précédentes, caractérisé en ce que l'élément de retenue et d'étanchéité (13b, 14b) est prévu pour faire office de bandelette adhésive d'étanchéité.
